# EUROPÄISCHE PATENTSCHRIFT

(11) **EP 3 382 255 B1**
(45) Veröffentlichungstag und Bekanntmachung des Hinweises auf die Patenterteilung: **03.07.2019**
(21) Anmeldenummer: 17163633.5
(22) Anmeldetag: 29.03.2017
(51) Int. Cl.: F16L 53/38, H05B 3/06, H05B 3/42, F01N 3/20, F01N 3/28

(54) **ROHRLEITUNG UMFASSEND EINEN VERBINDER SOWIE VERFAHREN ZUM BETRIEB DIESER ROHRLEITUNG**
PIPELINE COMPRISING A CONNECTOR AND METHOD FOR OPERATING THIS PIPELINE
CONDUITE COMPRENANT UN RACCORD ET PROCÉDÉ DE FONCTIONNEMENT DE LADITE CONDUITE

(43) Veröffentlichungstag der Anmeldung: 03.10.2018
(73) Patentinhaber: TI Automotive (Fuldabrück) GmbH, 34277 Fuldabrück (DE)
(72) Erfinder: Suffner, Ingo, 34277 Fuldabrück (DE); Barthel, Iris, 34270 Schauenburg (DE); Fischbach, Gerd, Borken (DE); Choo, Albert, Gyeyang-gu Incheon 407-053 (KR); Rohde, Reiner, 34323 Malsfeld (DE); Bube, Kay, 36277 Schenklengsfeld (DE); Weissing, Michael, 69120 Heidelberg (DE)
(74) Vertreter: Kasseck, Christoph

(56) Entgegenhaltungen:
- EP-A1- 2 706 280
- EP-A2- 2 420 715
- WO-A1-2013/053478
- WO-A1-2016/034284

## Beschreibung

Die Erfindung betrifft eine Rohrleitung für ein fluides Medium von Kraftfahrzeugen, insbesondere für eine wässrige Harnstofflösung, umfassend ein Rohr und einen an einem Rohrende des Rohres angeordneten Verbinder. Der Verbinder weist ein Anschlussteil, einen Heizdraht und ein das Anschlussteil und den Heizdraht umschließendes Gehäuse auf. Das Anschlussteil umfasst zum rastenden Verbinden mit einem in das Anschlussteil einsteckbaren Stecker einen Rückhalter. Die Erfindung betrifft ferner ein Verfahren zum Betrieb einer solchen Rohrleitung.

Eine solche Rohrleitung ist beispielsweise aus EP 2 137 449 B1 bekannt. Das Anschlussteil weist an seiner Außenseite eine Vielzahl an Ausrichtungselementen zur Ausrichtung des Heizdrahtes in oder auf dem Anschlussteil auf. So kann der Heizdraht beispielsweise wendelförmig oder mit mäanderartigem Verlauf auf der Außenseite des Anschlussteiles geführt werden, wodurch eine relativ gleichmäßige Verteilung der Heizleistung auf dem Anschlussteil erreicht wird. Dabei erleichtern die Ausrichtungselemente die Anordnung des Heizdrahtes auf der Außenseite des Anschlussteiles erheblich und tragen so zu einer Verringerung des Aufwandes beim Anordnen des Heizdrahtes auf dem Anschlussteil bei. Allerdings hat sich herausgestellt, dass die Ausrichtung des Heizdrahtes auf der Außenseite des Anschlussteiles selbst mit den Ausrichtungselementen immer noch sehr aufwändig ist. So ist die maschinelle Anordnung des Heizdrahtes in den Ausrichtungselementen bzw. um die Ausrichtungselemente herum sehr aufwändig, so dass die entsprechende Drahtanordnungsvorrichtung sehr kostspielig ist.

Ein weiteres Beispiel ist aus der EP 2 420 715 A2 bekannt. Die Rohrleitung umfasst ein Rohr, sowie einen am Rohr angeordneten Verbinder. Der Verbinder umfasst ein Anschlussteil, einen Heizdraht sowie ein Gehäuse. Das Anschlussteil ist mit einem Rückhalter versehen. Das Rohr umfasst ein Innenrohr sowie ein Schutzrohr, wobei ein Heizleiter um das Innenrohr gewunden ist.

Der Erfindung liegt daher die technische Aufgabe zugrunde, eine Rohrleitung der eingangs genannten Art anzugeben, bei welcher der Herstellungsaufwand und insbesondere der Aufwand bei der Anordnung des Heizdrahtes auf dem Anschlussteil verringert wird. Ferner liegt der Erfindung die technische Aufgabe zugrunde, ein Verfahren zum Betrieb einer Rohrleitung anzugeben, wobei sich die Rohrleitung mit einem geringen Herstellungsaufwand auszeichnet.

Zur Lösung der technischen Aufgabe lehrt die Erfindung eine Rohrleitung für ein fluides Medium von Kraftfahrzeugen, insbesondere für eine wässrige Harnstofflösung, umfassend ein Rohr und einen an einem Rohrende des Rohres angeordneten Verbinder, wobei der Verbinder ein Anschlussteil, einen Heizdraht und ein das Anschlussteil und den Heizdraht umschließendes Gehäuse aufweist, wobei das Anschlussteil zum rastenden Verbinden mit einem in das Anschlussteil einsteckbaren Stecker einen Rückhalter umfasst, wobei das Gehäuse eine dem Anschlussteil zugewandte Innenseite und eine Außenseite hat,
wobei das Rohr ein Innenrohr und ein Schutzrohr umfasst, wobei das Rohr einen Heizleiter umfasst, wobei der Heizleiter um das Innenrohr gewunden ist, wobei das Anschlussteil zwei Anschlussenden zum fluiddichten Anschluss umfasst, wobei eines der beiden Anschlussenden dem Rückhalter und eines der beiden Anschlussenden dem Rohrende zugeordnet ist, wobei das Anschlussteil einen Zwischenabschnitt zwischen den Anschlussenden aufweist, wobei das Anschlussteil eine dem Gehäuse zugewandte Außenseite und eine Innenseite umfasst, wobei die Innenseite des Anschlussteiles einen Kanal bildet, welcher die Anschlussenden zwecks Durchleitung des fluiden Mediums durch das Anschlussteil miteinander verbindet,
wobei sich der Heizdraht wenigstens von dem dem Rohrende zugeordneten Anschlussende bis in den Zwischenabschnitt erstreckt. Der Verbinder ist wenigstens entlang des Zwischenabschnittes des Anschlussteiles frei von in oder auf dem Anschlussteil angeordneten Ausrichtungselementen zur Ausrichtung des Heizdrahtes. Drüber hinaus ist ein Wärmeleitelement im Inneren des Rohrendes angeordnet, wobei sich dieses Wärmeleitelement bis in das Anschlussteil erstreckt.

Der Erfindung liegt die grundsätzliche Erkenntnis zugrunde, dass es für eine ausreichende Beheizung des fluiden Mediums der Ausrichtungselemente nicht bedarf. In der Folge ergibt sich ein gänzlich neuer Aufbau des Anschlussteiles, welcher vollständig ohne Ausrichtungselemente für die Ausrichtung bzw. Führung des Heizdrahtes auskommt. Wann immer Verbinder für wässrige Harnstofflösungen mit einem Heizdraht beheizt wurden, wurden stets Ausrichtungselemente für die Ausrichtung des Heizdrahtes vorgesehen. Diese Lehre hat, so scheint es, sich verselbständigt und wurde nicht mehr hinterfragt. Die vorliegende Erfindung bricht nun mit dieser Lehre und erreicht dadurch eine Verringerung des Aufwandes bei der Herstellung und insbesondere bei der Anordnung des Heizdrahtes am Anschlussteil. Die Freiheit von Ausrichtungselementen an dem Anschlussteil hat zudem den Vorteil, dass das Anschlussteil auch für nicht beheizte Rohrleitungen verwendet werden kann, was zu Einsparungen eines entsprechenden Spritzgusswerkzeuges für das Anschlussteil führt.

Der Begriff "Heizdraht" meint insbesondere ein solches Heizelement, welches von elektrischem Strom durchflossen werden kann und aufgrund des elektrischen Stromes eine Wärmemenge abgibt. Unter "Heizdraht" ist insbesondere jener elektrisch beheizbare Drahtabschnitt zu verstehen, welcher nicht auf dem Innenrohr anliegt. Demgegenüber ist unter dem Begriff "Heizleiter" vorzugsweise jener elektrisch beheizbare Drahtabschnitt zu verstehen, welcher auf dem Innenrohr anliegt. Unter der Bezeichnung "Zwischenabschnitt" wird vorzugsweise derjenige Abschnitt verstanden, welcher sich von einem Stirnende des Rohres bis zum Rückhalter erstreckt.

Unter dem Ausdruck "Ausrichtungselement" werden vorzugsweise solche Elemente verstanden, welche nur der Ausrichtung des Heizdrahtes dienen. Wie dem Stand der Technik zu entnehmen ist, können solche Ausrichtungselemente beispielsweise Nuten oder Stifte bzw. Vorsprünge sein, welche zweckmäßigerweise auf der Außenseite des Anschlussteiles angeordnet sind. Demgegenüber ist die Außenseite des Anschlussteiles als solche nicht als Ausrichtungselement im Sinne dieser Erfindung zu verstehen; die Außenseite des Anschlussteiles kann zwar den Heizdraht berühren und damit verformen und auch ausrichten, doch dient die Außenseite des Anschlussteiles nicht ausschließlich der Ausrichtung des Heizdrahtes. So bezweckt das Anschlussteil und damit auch seine Außenseite primär die fluidische Verbindung zwischen dem Rohr einerseits und dem Stecker andererseits. In der Folge ist die Außenseite des Anschlussteiles kein Ausrichtungselement im Sinne der Erfindung. Ausrichtungselemente im Sinne der Erfindung sind insbesondere angeformte Elemente, welche beispielsweise durch Spritzguss zusammen mit dem Anschlussteil erzeugt werden. Die Ausrichtungselemente können aber auch mittels Stoffschluss (Kleben oder Verschweißen) und/oder mittels Formschluss (insbesondere Verrastung) und/oder mittels Kraftschluss (z. B. Quetschung) auf dem Anschlussteil bzw. auf der Innenseite des Gehäuses befestigt sein. Der Ausdruck "Ausrichtungselement" meint insbesondere solche Elemente, deren Wände auf der Außenseite des Anschlussteiles radial von dem Anschlussteil abstehen. Ferner sind unter dem Begriff "Ausrichtungselement" insbesondere solche Elemente nicht zu verstehen, welche den Heizdraht lediglich an das Anschlussteil andrücken, beispielsweise Klebebänder oder Schrumpfschläuche. Die Ausrichtungselemente führen, abgesehen von der Anlage des Heizdrahtes auf dem Anschlussteil, bevorzugt keine Richtungsänderung des Heizdrahtes auf der vorzugsweise zylindrischen Außenseite des Anschlussteiles herbei.

Der Begriff "Abschnitt" meint insbesondere die axiale Ausdehnung eines Bereiches. Dabei meint der Begriff "axial" vorzugsweise die Achse des Anschlussteiles bzw. des Rohres bzw. die Achsen des Anschlussteiles im Falle eines gewinkelten Anschlussteiles. Gemäß einer vorteilhaften Ausführungsform ist ein Raum zwischen der Innenseite des Anschlussteils und der Außenseite des Gehäuses wenigstens entlang des Zwischenabschnitts des Anschlussteils frei von Ausrichtungselementen zur Ausrichtung des Heizdrahtes. Vorzugsweise ist der Verbinder entlang der vollständigen Länge des Anschlussteiles frei von in oder auf dem Anschlussteil angeordneten Ausrichtungselementen zur Ausrichtung des Heizdrahtes. Dabei meint der Ausdruck "vollständige Länge" vorzugsweise die axiale Ausdehnung des Anschlussteiles von Stirnende zu Stirnende. Ganz besonders vorzugsweise ist der Verbinder vollständig frei von Ausrichtungselementen, welche lediglich der Ausrichtung des Heizdrahtes dienen. Hiervon sind insbesondere solche Elemente, welche neben Heizdraht auch elektrische Verbindungen ausrichten, nicht umfasst.

Das Wärmeleitelement ist zweckmäßigerweise so ausgebildet, dass Wärme des Heizleiters bzw. der Heizleiter sich auf das Wärmeleitelement überträgt, so dass der Kanal des Anschlussteiles über das Wärmeleitelement erwärmt wird. Das Wärmeleitelement ist vorzugsweise im Inneren des Innenrohres angeordnet. Bevorzugt umschließt eine Innenseite des Innenrohrs das Wärmeleitelement entlang eines ersten axialen Abschnitts. Vorteilhafterweise umschließt das Anschlussteil und bevorzugt die Innenseite des Anschlussteils das Wärmeleitelement entlang eines zweiten axialen Abschnitts. Vorzugsweise steht eine Innenseite des Innenrohrs in Kontakt mit dem Wärmeleitelement, wobei der Kontakt vorzugsweise ein Druckkontakt ist. Der Drucckontakt ist zweckmäßigerweise in radialer Richtung ausgebildet. Das Wärmeleitelement ist vorzugsweise so im Inneren des Rohrendes angeordnet, dass es mit dem Fluid in Berührung bringbar ist. Es ist vorteilhaft, wenn der Heizleiter bzw. die Heizleiter des Rohres und/oder der Heizdraht bzw. die Heizdrähte sich mit dem Wärmeleitelement abschnittsweise in axialer Richtung überlappen. Bevorzugt umschließt der Heizleiter bzw. umschließen die Heizleiter des Rohres das Wärmeleitelement - vorzugsweise berührungsfrei - entlang eines ersten axialen Abschnitts. Zweckmäßigerweise sind das Wärmeleitelement und der Heizleiter bzw. die Heizleiter des Rohres durch das Innenrohr voneinander getrennt. Das Wärmeleitelement umfasst bevorzugt Metall oder einen wärmeleitfähigen Kunststoff. Das Wärmeleitelement kann beispielsweise als Hülse, als Stab oder als Schraubenfeder ausgebildet sein, wobei das Wärmeleitelement vorzugsweise als Schraubenfeder ausgebildet ist. Besonders vorzugsweise wird das Wärmeleitelement lediglich indirekt über den bzw. die außenliegenden Heizleiter des Rohres und/oder über den/die außenliegenden Heizdraht/Heizdrähte des Anschlussteiles beheizt. Vorzugsweise sind wenigstens 20 %, weiter vorzugsweise wenigstens 25 % und ganz besonders vorzugsweise wenigstens 30 % des Wärmeleitelementes im Rohr angeordnet.

Gemäß einer besonders bevorzugten Ausführungsform ist der Heizdraht am Rohr befestigt und insbesondere eingeklemmt. Die Befestigung des Heizdrahtes am Rohr umfasst neben dem Klemmen beispielsweise ein Verrasten, ein Verkleben oder ein Verschweißen. Vorzugsweise ist der Heizdraht lediglich am Rohr bzw. Rohrende befestigt und ist insbesondere nicht an dem Anschlussteil oder am Gehäuse befestigt. Zweckmäßigerweise ist der Heizdraht mittelbar, insbesondere über elektrische Verbindungen, am Rohr befestigt und bevorzugt kraftschlüssig befestigt. Besonders vorzugsweise sind die elektrischen Verbindungen an dem Rohr und vorzugsweise am Rohrende - vorzugsweise kraftschlüssig - befestigt. Zweckmäßigerweise sind die elektrischen Verbindungen insbesondere nicht an dem Anschlussteil und/oder dem Gehäuse befestigt. Die Rohrleitung ist zweckmäßigerweise so ausgebildet, dass eine mechanische Beanspruchung des Heizdrahtes zunächst über das Rohr übertragen und dann erst auf das Anschlussteil ausgeübt wird.

Gemäß einer ganz besonders bevorzugten Ausführungsform ist ein Halter zur Halterung des Heizdrahtes/der Heizdrähte bzw. von elektrischen Verbindungen am Rohrende angeordnet. Vorzugsweise hält der Halter wenigstens einen Kaltleiter und vorzugsweise zwei Kaltleiter, wobei die Kaltleiter zweckmäßigerweise in den elektrischen Verbindungen mit dem Heizdraht bzw. den Heizdrähten verbunden sind. Zweckmäßigerweise ist der Halter separat von dem Anschlussteil und dem Gehäuse ausgebildet. Vorzugsweise berührt der Halter das Gehäuse und/oder das Anschlussteil nicht. Zweckmäßigerweise berührt der Halter lediglich das Rohr sowie eine oder mehrere elektrische Verbindungen bzw. den/die Kaltleiter bzw. den Heizdraht/die Heizdrähte. Zweckmäßigerweise ist der Halter auf dem Rohrende aufrastbar, wobei das Verrasten vorzugsweise reversibel ist. Es ist bevorzugt, dass das Verrasten des Halters an dem Rohr bzw. Rohrende neben einem Formschluss auch einen Kraftschluss erzeugt, so dass das Rohr bzw. Rohrende nach dem Verrasten in dem Halter eingeklemmt ist. Besonders vorzugsweise sitzt der Halter auf einem am Rohrende angeordneten Schrumpfschlauch. Der Schrumpfschlauch dichtet zweckmäßigerweise ein bzw. das Schutzrohr mit einem bzw. dem Innenrohr ab. Der Halter umfasst bevorzugt eine Nut zum Verrasten mit dem Rohr bzw. Rohrende.

Der Halter umfasst besonders vorteilhafterweise wenigstens eine, bevorzugt wenigstens zwei und besonders bevorzugt wenigstens drei Aufnahmen zur Aufnahme von jeweils einer elektrischen Verbindung. Die Aufnahme bzw. Aufnahmen ist/sind zweckmäßigerweise rohrförmig und vorzugsweise hohlzylindrisch ausgebildet. Die elektrischen Verbindungen sind vorzugsweise reversibel in den Aufnahmen form- und/oder kraftschlüssig befestigt und insbesondere eingeklemmt. Vorteilhafterweise ist/sind die Aufnahme bzw. Aufnahmen für die elektrischen Verbindungen parallel zur Achse des Rohres ausgebildet. Bevorzugt sind Öffnungen der Aufnahmen zum Einstecken der elektrischen Verbindungen zum Anschlussteil hin ausgerichtet. Die Aufnahmen haben vorteilhafterweise an ihrem dem Anschlussteil abgewandten Ende einen Anschlag, wodurch die axiale Position der elektrischen Verbindungen definiert wird. Im Falle von drei Aufnahmen sind die Aufnahmen zueinander bezüglich der Rohrachse - beispielsweise - mit jeweils etwa 120° Abstand um das Rohr bzw. Innenrohr verteilt.

Es ist sehr vorteilhaft bevorzugt, wenn der Heizdraht eine Litze mit einer Kunststoffbeschichtung aufweist, wobei die Kunststoffbeschichtung vorzugsweise einen Fluorkunststoff umfasst. Der Fluorkunststoff ist vorzugsweise ein thermoplastischer Kunststoff und besonders vorzugsweise Polyvinylidenfluorid (PVDF). Die Kunststoffbeschichtung ist vorzugsweise wenigstens 0,05 mm, weiter vorzugsweise wenigstens 0,10 mm und besonders vorzugsweise wenigstens 0,12 mm stark. Zweckmäßigerweise ist die Kunststoffbeschichtung höchstens 1,0 mm, vorzugsweise höchstens 0,6 mm und besonders vorzugsweise höchstens 0,4 mm stark. Es ist sehr bevorzugt, dass die Litze durch die Kunststoffbeschichtung hindurch erkennbar ist. Die Litze umfasst zweckmäßigerweise einen oder mehrere Einzeldrähte und weist vorzugsweise Kupfer bzw. eine Kupfer-Nickel-Legierung auf. Die Litze ist zweckmäßigerweise wenigstens 0,3 mm, bevorzugt wenigstens 0,4 mm und besonders bevorzugt wenigstens 0,5 mm dick. Die Litze ist vorteilhafterweise höchstens 1,2 mm, weiter vorteilhafterweise höchstens 1,0 mm und besonders vorteilhafterweise höchstens 0,8 mm dick.

Gemäß einer besonders bevorzugten Ausführungsform ist der Heizdraht zwischen dem Anschlussteil - vorzugsweise zwischen dem Zwischenabschnitt - und dem Gehäuse form- und/oder kraftschlüssig befestigt und insbesondere eingeklemmt. Es ist zweckmäßig, dass das Gehäuse auf seiner Innenseite einen Gehäuseabschnitt zur klemmenden Aufnahme des Heizdrahtes aufweist. Es ist bevorzugt, dass der in dem Gehäuseabschnitt aufgenommene Abschnitt des Heizdrahtes länger ist als der Gehäuseabschnitt in axialer Richtung. Der eingeklemmte Abschnitt des Heizdrahtes ist beispielsweise schraubenlinienförmig oder schleifenförmig oder mäanderförmig in dem Gehäuseabschnitt zur klemmenden Aufnahme des Heizdrahtes zusammengelegt. Es ist bevorzugt, dass der zusammengelegte Abschnitt des Heizdrahtes schraubenlinienförmig ist. Der schraubenlinienförmige Abschnitt ist vorzugsweise neben und weiter vorzugsweise nur auf einer Seite neben dem Anschlussteil angeordnet. Bevorzugt liegt die Achse des schrauben-linienförmigen Abschnittes etwa senkrecht zur Achse des Anschlussteiles. Es ist auch möglich, dass die Achse des schraubenlinienförmigen Abschnittes parallel zu der Achse des Anschlussteiles ausgerichtet ist.

Gemäß einer besonders bevorzugten Ausführungsform umfasst das Gehäuse miteinander verbundene Gehäuseteile. Der Ausdruck "miteinander verbundene" meint insbesondere, dass die Gehäuseteile ursprünglich nicht miteinander verbunden waren, so dass nach der Verbindung das Gehäuse eine Verbindungsstelle bzw. Verbindungsstellen aufweist. Bei diesen Verbindungsstellen handelt es sich beispielsweise um Rastelemente, Schweißnähte oder dergleichen. Vorzugsweise umfasst das Gehäuse wenigstens zwei und besonders vorzugsweise lediglich zwei Gehäuseteile. Die Gehäuseteile sind vorzugsweise Gehäuseschalen und besonders vorzugsweise zwei Gehäusehalbschalen. Möglich ist aber auch ein einstückiges Gehäuse mit zwei ursprünglich miteinander verbundenen Gehäuseteilen, welche beispielsweise über ein Filmscharnier verbunden sind. Das Gehäuse ist zweckmäßigerweise so ausgebildet, dass es zwischen sich und dem Anschlussteil einen mit Luft gefüllten Raum einschließt.

Der Ausdruck "mit Luft gefüllter Raum" ist insbesondere im Falle eines Gehäuses in Form einer Umspritzung um das Anschlussteil nicht gegeben. Zweckmäßigerweise befindet sich der Heizdraht bzw. die Heizdrähte wenigstens abschnittsweise innerhalb des mit Luft gefüllten Raums. Es ist bevorzugt, dass der Heizdraht und/oder der mit Luft gefüllte Raum sich von dem dem Rohrende zugeordneten Anschlussende bis wenigstens in den Zwischenabschnitt hinein erstrecken. Vorteilhafterweise ist die elektrische Verbindung bzw. sind die elektrischen Verbindungen in dem mit Luft gefüllten Raum angeordnet. Es ist zweckmäßig, dass wenigstens das dem Rohrende zugeordnete Anschlussende und wenigstens ein Teilabschnitt des Zwischenabschnitts von dem mit Luft gefüllten Raum umschlossen sind. Es ist möglich, dass wenigstens ein Teilabschnitt des Rohrendes von dem mit Luft gefüllten Raum umschlossen ist. Vorzugsweise ist ein Halter bzw. ist der Halter in dem mit Luft gefüllten Raum angeordnet. Gemäß einer besonders bevorzugten Ausführungsform erstreckt sich der mit Luft gefüllte Raum von Stirnende zu Stirnende des Gehäuses. Besonders vorzugsweise ist kein Kunststoff in das Gehäuse eingespritzt. Es ist bevorzugt, dass wenigstens das dem Rückhalter zugeordnete Stirnende des Gehäuses ein Eingriffselement aufweist zum Eingriff mit einem Eingriffselement des Anschlussteiles. Zweckmäßigerweise erzeugt das Eingriffselement des Gehäuses sowie das Eingriffselement des Anschlussteiles wenigstens in axialer Richtung einen Formschluss.

Das Schutzrohr ist gegenüber dem Innenrohr am Rohrende - besonders vorzugsweise mittels eines Schutzelementes in Form eines Schrumpfschlauches oder einer starren Hülse - abgedichtet. Sehr vorteilhafterweise ist am Rohrende ein Schrumpfschlauch angeordnet. Das Rohr umfasst einen, vorzugsweise zwei Heizleiter, wobei der bzw. die Heizleiter bevorzugt wendelförmig um das Innenrohr gewunden sind. Vorteilhafterweise liegen der bzw. die Heizleiter auf dem Innenrohr an. Gemäß einer ganz besonders bevorzugten Ausführungsform sind die beiden Heizleiter doppelhelixförmig um das Innenrohr gewunden. Es ist zweckmäßig, dass der bzw. die Heizleiter mittels eines Fixierungsteiles auf dem Innenrohr zur Anlage gebracht sind. Das Fixierungsteil ist beispielsweise ein Klebeband, welches bevorzugt wendelförmig um das Innenrohr und um den bzw. die Heizleiter gewickelt ist. Der Schrumpfschlauch am Rohrende umschließt zweckmäßigerweise den bzw. die Heizleiter und bevorzugt auch das Fixierteil. Das Schutzrohr ist beispielsweise ein Wellrohr oder ein Rohr mit konstantem Innen- und Außendurchmesser. Besonders vorzugsweise ist das Innenrohr mit dem Heizleiter bzw. den Heizleitern und vorzugsweise mit dem Klebeband länger ausgebildet als das Schutzrohr, so dass das Innenrohr das Schutzrohr überragt. Der Ausdruck "Rohrende" meint insbesondere den Endabschnitt des Rohres, welcher frei von dem Schutzrohr ist. Besonders vorzugsweise umschließt das Gehäuse das Rohrende und einen Abschnitt des Schutzrohres. Besonders vorzugsweise steht das Gehäuse in Eingriff mit dem Schutzrohr, so dass das Schutzrohr zugsicher in dem Gehäuse angeordnet ist.

Es ist bevorzugt, dass das Rohrende in das dem Rohrende zugeordnete Anschlussende des Anschlussteils hineingesteckt ist. Das dem Rohrende zugeordnete Anschlussende umfasst zweckmäßigerweise eine Aufnahme zum Einstecken des Rohrendes bzw. des Innenrohrs, wobei die Aufnahme vorzugsweise einen Anschlag für das Rohrende bzw. das Innenrohr aufweist. Es ist bevorzugt, dass der Innendurchmesser der Aufnahme so bemessen ist, dass das Innenrohr in der Aufnahme eingeklemmt wird, wodurch ein Kraftschluss entsteht. Ganz besonders vorzugsweise wird das Innenrohr mit der Aufnahme des Anschlussendes stoffschlüssig und irreversibel, beispielsweise mittels Laserstrahlschweißen, verbunden. Es ist zweckmäßig, dass das Anschlussteil schwarz gefärbt ist, wobei das Anschlussteil zugleich für Infrarot- bzw. Nahinfrarotstrahlung des Lasers transluzent ist, so dass die vom Laser in das Anschlussende eingebrachte Wärmemenge das Innenrohr erreicht. Das Innenrohr ist zweckmäßigerweise schwarz gefärbt und vorzugsweise gegenüber Infrarot- bzw. Nahinfrarotstrahlung opak ausgebildet.

Es ist vorteilhaft, wenn das Gehäuse ein Eingriffselement zum Eingriff mit dem Anschlussteil aufweist. Das Eingriffselement des Gehäuses ist beispielsweise eine Nut oder ein Flansch. Das Anschlussteil umfasst vorzugsweise im Bereich des dem Rückhalter zugeordneten Anschlussendes ein Eingriffselement zum Eingriff mit dem Eingriffselement des Gehäuses. Das Eingriffselement des Anschlussteiles ist beispielsweise ein Flansch oder eine Nut. Es ist bevorzugt, dass das Gehäuse ein Halteelement zum Eingriff in das Schutzrohr aufweist. Vorzugsweise ist das Halteelement als Flansch ausgebildet, welcher beispielsweise in eine Nut des Schutzrohres eingreift. Das Halteelement ist vorzugsweise an dem dem Rohrende zugeordneten Stirnende des Gehäuses angeordnet. Es ist bevorzugt, dass das Gehäuse weitere Stützelemente auf seiner Innenseite aufweist, wobei die Stützelemente der Positionierung des Anschlussteiles im Gehäuse dienen.

Gemäß einer besonders bevorzugten Ausführungsform umschließt das Gehäuse wenigstens eine elektrische Verbindung und vorzugsweise wenigstens zwei und besonders vorzugsweise wenigstens drei elektrische Verbindungen, beispielsweise zur Kontaktierung des Heizdrahtes mit einem Kaltleiter für eine externe elektrische Steckverbindung. Der Ausdruck "elektrische Verbindung" meint insbesondere eine Klemmverbindung oder eine Lötverbindung. Von dem Ausdruck "elektrische Verbindung" sind insbesondere solche Ausführungsformen nicht umfasst, bei denen der Heizleiter bzw. Heizdraht durchgängig in dem Gehäuse verlaufen. Die elektrischen Verbindungen umfassen vorzugsweise Schrumpfschläuche und elektrische Kontakte, wobei die elektrischen Kontakte zweckmäßigerweise Quetschhülsen aufweisen. Gemäß einer ersten Ausführungsform umschließt das Gehäuse lediglich eine elektrische Verbindung. In diesem Falle weist das Innenrohr lediglich einen Heizleiter auf, wobei dann der Heizleiter innerhalb des Gehäuses in den Heizdraht übergeht und in der elektrischen Verbindung mit einem Kaltleiter verbunden wird, welcher Kaltleiter aus dem Gehäuse herausgeführt wird. Gemäß einer zweiten Ausführungsform weist das Rohr zwei Heizleiter auf, wobei die Heizleiter innerhalb des Gehäuses in zwei Heizdrähte übergehen, wobei jeder der beiden Heizdrähte in einer der beiden elektrischen Verbindungen mit jeweils einem Kaltleiter verbunden wird. Gemäß einer dritten Ausführungsform umschließt das Gehäuse drei elektrische Verbindungen. Nach dieser Ausführungsform umfasst das Rohr zwei Heizleiter und der Verbinder umfasst einen eigenen, separaten Heizdraht. In der ersten elektrischen Verbindung werden der erste Heizleiter und das erste Ende des Heizdrahtes miteinander verbunden. In der zweiten elektrischen Verbindung dieser Ausführungsform werden das zweite Ende des Heizdrahtes sowie ein erster Kaltleiter miteinander verbunden. In der dritten elektrischen Verbindung werden der zweite Heizleiter sowie der zweite Kaltleiter miteinander verbunden. Gemäß einer vierten Ausführungsform weist der Verbinder einen eigenen, separaten Heizdraht auf und das Rohr umfasst zwei Heizleiter. Der erste Heizleiter wird mit dem ersten Ende des Heizdrahtes über eine erste elektrische Verbindung verbunden, wohingegen der zweite Heizleiter mit dem zweiten Ende des Heizdrahtes über eine zweite elektrische Verbindung verbunden wird. Gemäß dieser Ausführungsform weist der Verbinder keinen Kaltleiter auf. In der Folge umschließt das Gehäuse zwei elektrische Verbindungen. Gemäß einer fünften Ausführungsform umschließt das Gehäuse keine elektrische Verbindung, weil ein erster Heizleiter des Rohres innerhalb des Gehäuses in den Heizdraht übergeht und der Heizdraht beim Zurücklaufen in das Rohr in einen zweiten Heizleiter übergeht.

Es ist besonders bevorzugt, wenn das Gehäuse und der Halter so ausgebildet sind, dass sie einander nicht berühren. Vorteilhafterweise berühren die elektrische Verbindung bzw. die elektrischen Verbindungen und das Gehäuse einander nicht. Es ist zweckmäßig, dass die elektrischen Verbindungen bzw. der Halter wenige Millimeter von der Innenseite des Gehäuses entfernt sind/ist.

Das Anschlussteil ist gemäß einer möglichen Ausführungsform mehrteilig ausgebildet und weist besonders bevorzugt wenigstens drei separate Teile auf. Es ist zweckmäßig, dass der Rückhalter zum lösbaren Arretieren als separates Teil ausgebildet ist, wobei der Rückhalter vorzugsweise ein Kopfteil sowie zwei Seitenschenkel aufweist. Insbesondere die beiden Seitenschenkel dienen der lösbaren Arretierung des Steckers. Das Anschlussteil umfasst vorzugsweise ein Kopfteil, in welchem der Rückhalter angeordnet ist sowie ein Dichtungsteil, wobei das Dichtungsteil das dem Rohrende zugeordnete Anschlussende aufweist. Zweckmäßigerweise nimmt das Dichtungsteil das Kopfteil in sich auf, wobei vorzugsweise das Dichtungsteil und das Kopfteil miteinander verrastet sind. In dem Dichtungsteil ist zweckmäßigerweise eine Dichtungsanordnung zum fluiddichten Abdichten des Steckers vorgesehen.

Die Erfindung lehrt ein Verfahren zum Betrieb einer Rohrleitung, insbesondere einer erfindungsgemäßen Rohrleitung, wobei die Rohrleitung ein Rohr und einen an einem Rohrende des Rohres angeordneten Verbinder umfasst, wobei der Verbinder ein Anschlussteil, einen Heizdraht und ein das Anschlussteil und den Heizdraht umschließendes Gehäuse aufweist, wobei das Anschlussteil zum rastenden Verbinden mit einem in das Anschlussteil einsteckbaren Stecker einen Rückhalter aufweist, wobei das Gehäuse eine dem Anschlussteil zugewandte Innenseite und eine Außenseite hat, wobei das Rohr ein Innenrohr und ein Schutzrohr) umfasst, wobei das Rohr einen Heizleiter umfasst, wobei das Anschlussteil zwei Anschlussenden zum fluiddichten Anschluss umfasst, wobei eines der beiden Anschlussenden dem Rückhalter und eines der beiden Anschlussenden dem Rohrende zugeordnet ist, wobei das Anschlussteil einen Zwischenabschnitt zwischen den Anschlussenden aufweist, wobei das Anschlussteil eine dem Gehäuse zugewandte Außenseite und eine Innenseite aufweist, wobei die Innenseite des Anschlussteiles einen Kanal bildet, welcher die Anschlussenden zwecks Durchleitung des fluiden Mediums durch das Anschlussteil miteinander verbindet,
wobei sich der Heizdraht wenigstens von dem dem Rohrende zugeordneten Anschlussende bis in den Zwischenabschnitt erstreckt, wobei ein Heizleiter entlang wenigstens eines Abschnittes des Rohres verläuft und mit dem Heizdraht verbunden ist, wobei der Heizleiter um das Innenrohr gewunden ist, wobei im Betrieb der Rohrleitung der Heizdraht das Anschlussteil von außen erwärmt und der Heizleiter das Rohr erwärmt,
wobei ein Wärmeleitelement im Inneren des Rohrendes angeordnet ist, welches Wärmeleitelement sich bis in das Anschlussteil erstreckt, so dass das Wärmeleitelement im Betrieb der Rohrleitung einen Teil der von dem Heizleiter erzeugten Wärmemenge aufnimmt und in das Anschlussteil leitet, so dass das Anschlussteil von innen erwärmt wird.

Nachfolgend wird die Erfindung anhand einer lediglich ein Ausführungsbeispiel darstellenden Zeichnung detailliert erläutert. Es zeigen in schematischer Darstellung
- **Figur 1**: eine erfindungsgemäße Rohrleitung in perspektivischer Darstellung
- **Figur 2**: die Rohrleitung aus Figur 1 im Längsschnitt ohne Gehäuse, Halter, elektrische Verbindungen und den vom Gehäuse umschlossenen Heizdraht,
- **Figur 3**: einen Querschnitt durch Gehäuse, Halter und Rohrende aus Figur 1 mit beiden Gehäuseteilen und
- **Figur 4**: eine Querschnittsansicht des Heizdrahtes bzw. des Heizleiters aus den Figuren 1 und 3 bzw. 2.

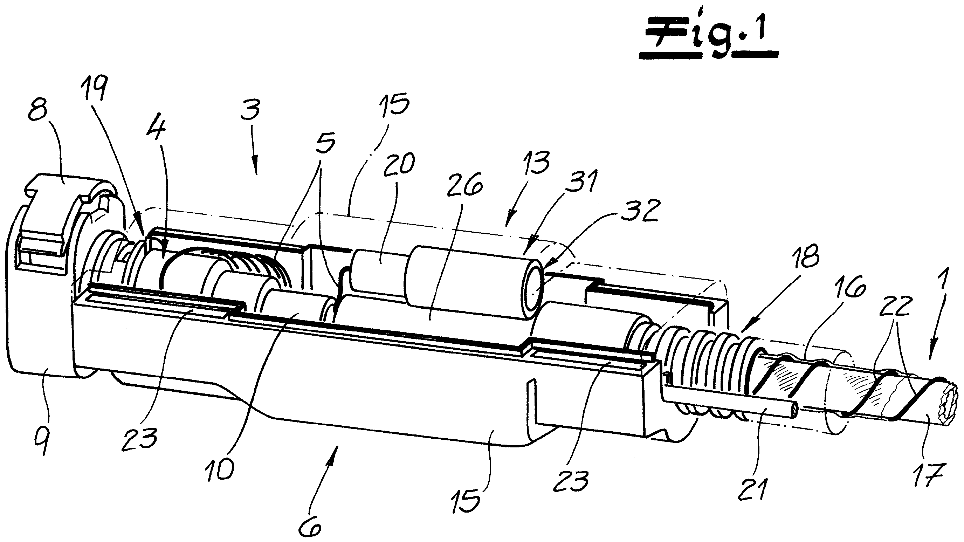

In Figur 1 ist ein Rohr 1 an seinem linken Ende mit einem Verbinder 3 versehen. Das Rohr 1 umfasst ein Innenrohr 17, zwei bevorzugt doppelhelixförmig um das Innenrohr 17 gewickelte Heizleiter 22 in Form von Drähten sowie ein Schutzrohr 18 in Form eines Wellrohrs. Die beiden Heizleiter 22 sind mittels eines Fixierteiles 16 in Form eines Klebebandes auf dem Innenrohr 17 fixiert und werden abschließend von dem Schutzrohr 18 ummantelt. Der Verbinder 3 umfasst ein Anschlussteil 4 sowie ein Gehäuse 6. Das Anschlussteil 4 weist zwei Anschlussenden 9, 10 auf, wobei das linke Anschlussende 9 einen Rückhalter 8 umfasst. Das linke Anschlussende 9 ist dazu ausgebildet, einen hier nicht dargestellten Stecker aufzunehmen, wobei der Rückhalter 8 der lösbaren Verrastung des Steckers dient. Das rechte Anschlussende 10 weist eine Aufnahme auf, in welche das Innenrohr 17 hineingesteckt ist. Mittels Laserdurchstrahlschweißen ist das Innenrohr 17 in dem Anschlussende 10 befestigt.

Das Schutzrohr 18 ist kürzer ausgebildet als das Innenrohr 17, so dass das Innenrohr 17 das Schutzrohr 18 überragt. Der Ausdruck "Rohrende" meint insbesondere die Länge, um welche das Innenrohr 17 das Schutzrohr 18 überragt. Die Heizleiter 22 liegen etwa bei Eintritt des Innenrohres 17 in die Aufnahme des Anschlussendes 10 nicht mehr an dem Innenrohr 17 an und werden dann als Heizdrähte 5 bezeichnet. Jeder der beiden Heizdrähte 5 läuft dann in jeweils eine elektrische Verbindung 20 hinein. Die elektrischen Verbindungen 20 weisen vorzugsweise einen Schrumpfschlauch auf, in dessen rechtem Ende sich eine Quetschhülse befindet. Dort ist einer der beiden Heizdrähte 5 mit einem Kaltleiter 21 verbunden, während der andere der beiden Heizdrähte 5 des Rohres 1 mit einem Heizdraht 5 des Anschlussteiles 4 verbunden ist.

Der Heizdraht 5 des Anschlussteiles 4 erstreckt bis in den Zwischenabschnitt 11 des Anschlussteiles 4 und ist dort zwischen dem Anschlussteil 4 und einem Gehäuseabschnitt zur klemmenden Aufnahme des Heizdrahtes 5 eingeklemmt. Der Heizdraht 5 des Anschlussteiles ist in diesem Gehäuseabschnitt schraubenlinienförmig versetzt zusammengelegt. Das zweite Ende des Heizdrahtes 5 des Anschlussteiles 4 läuft dann zurück und schließlich in eine dritte elektrische Verbindung 20 hinein. Auch diese elektrische Verbindung 20 sitzt in einer Aufnahme 31 des Halters 13. In dieser elektrischen Verbindung 20 ist der Heizdraht 5 des Anschlussteiles 4 mit einem zweiten Kaltleiter 21 verbunden.

Jede der drei elektrischen Verbindungen 20 ist in einer hohlzylindrischen Aufnahme 31 eines Halters 13 festgeklemmt. Der Halter 13 weist eine Nut 12 zur rastenden und klemmenden Aufnahme des Rohrendes 2 auf. Das Rohrende 2 ist mit einem Schrumpfschlauch 26 versehen, welcher das Schutzrohr 18 gegenüber dem Innenrohr 17 abdichtet. Ferner schützt der Schrumpfschlauch 26 die beiden Heizleiter 22 in dem Abschnitt, in welchem das Innenrohr 17 das Schutzrohr 18 überragt. Der Schrumpfschlauch 26 ermöglicht die komplikationsfreie Befestigung des Rohrendes 2 in dem Halter 13.

Das Gehäuse 6 umfasst zwei Gehäusehalbschalen 15, wobei die obere Gehäusehalbschale 15 in Figur 1 nur angedeutet ist. Die beiden Gehäusehalbschalen 15 werden über Rastmittel 23 miteinander verbunden und über Eingriffselemente 19 an ihrem dem Rückhalter 8 zugeordneten Stirnende in Eingriff gebracht mit entsprechenden Vorsprüngen des Anschlussteils 4. Die Gehäusehalbschalen 15 weisen an ihrem dem Rohrende 2 zugeordneten Stirnende zudem eine Ausnehmung für die Aufnahme des Schutzrohres 18 auf. Ebenso weist zumindest eine der beiden Halbschalen 15 Ausnehmungen für die Hindurchführung von einem der beiden oder beiden Kaltleitern 21 auf. Die Gehäusehalbschalen 15 überlappen in axialer Richtung das Schutzrohr 18 entlang eines Teilabschnitts. Die beiden Gehäusehalbschalen 15 umschließen vollständig das Rohrende 2, den Schrumpfschlauch 26, den Halter 13, die elektrischen Verbindungen 20 sowie die Heizdrähte 5. Das Anschlussteil 4 hingegen wird lediglich zum größten Teil von dem Gehäuse 6 abgedeckt.

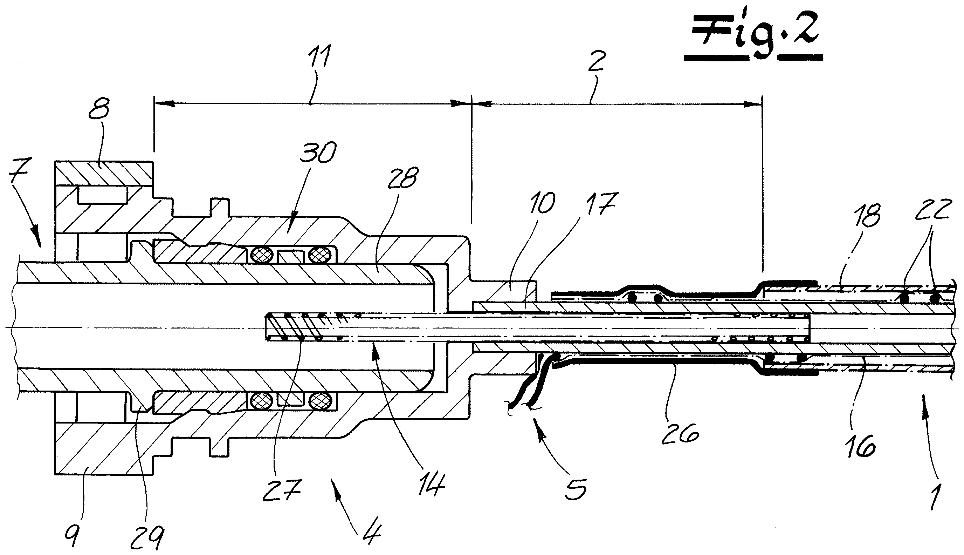

Figur 2 zeigt den Längsschnitt der Rohrleitung aus Figur 1, wobei der besseren Übersicht halber das Gehäuse 6, der Halter 13, die elektrischen Verbindungen 20, die beiden Heizdrähte 5 sowie die Kaltleiter 21 nicht dargestellt sind. Am linken Ende der Figur 2 ist das Anschlussteil 4 mit dem Anschlussende 9 und dem Rückhalter 8 zu erkennen. In dem Anschlussteil 4 ist eine Dichtungsanordnung 30 angeordnet, welche zwei Dichtungsringe, einen Abstandshalter zwischen den Dichtungsringen sowie einen diese drei Elemente fixierender Rastring umfasst. In dem Anschlussteil 4 ist ein Stecker 7 verrastet, welcher einen Steckerschaft 28 sowie einen Ringbund 29 aufweist. Der Steckerschaft 28 ist so dimensioniert, dass er eine kraftschlüssige Verbindung mit der Dichtungsanordnung 30 eingeht und hierdurch die fluidische Verbindung abdichtet. Der Ringbund 29 ist hinter zwei hier nicht dargestellten Rastschenkeln des Rückhalters 8 lösbar verrastet.

In der rechten Hälfte der Figur 2 ist der Aufbau des Rohres 1 gut zu erkennen. Das Innenrohr 17, beispielsweise aus Polyamid, wird von den zwei Heizleitern 22 doppelhelixförmig umschlossen, wobei das Fixierteil 16 in Form des Klebebandes die beiden Heizleiter 22 gleichsam wendelförmig umschließt und die beiden Heizleiter 22 so zur Anlage auf dem Innenrohr 17 bringt. Dieser Aufbau wird abschließend von dem Schutzrohr 18 in Form des Wellrohres ummantelt, wobei in dieser Figur das Wellrohr nur schematisch angedeutet wurde. Am Rohrende 2 übernimmt der Schrumpfschlauch 26 die mechanische Schutzfunktion bis zum Anschlussende 10 des Anschlussteiles 4. Der Schrumpfschlauch 26 hat zusätzlich noch die Funktion der Abdichtung des Schutzrohres 18. In dem Innenrohr 17 ist am Rohrende 2 ein Wärmeleitelement 14 angeordnet, welches sich bis in das Anschlussteil 4 bzw. bis in einen Zwischenabschnitt 11 des Anschlussteiles 4 und bis in den Steckerschaft 28 hinein erstreckt. Das Wärmeleitelement 14 ist als Schraubenfeder mit Windungen 27 ausgestaltet, aus Metall gebildet, und übt von innen einen Druck auf das Innenrohr 17 aus, so dass das Wärmeleitelement 14 in dem Innenrohr 17 sicher gehalten wird.

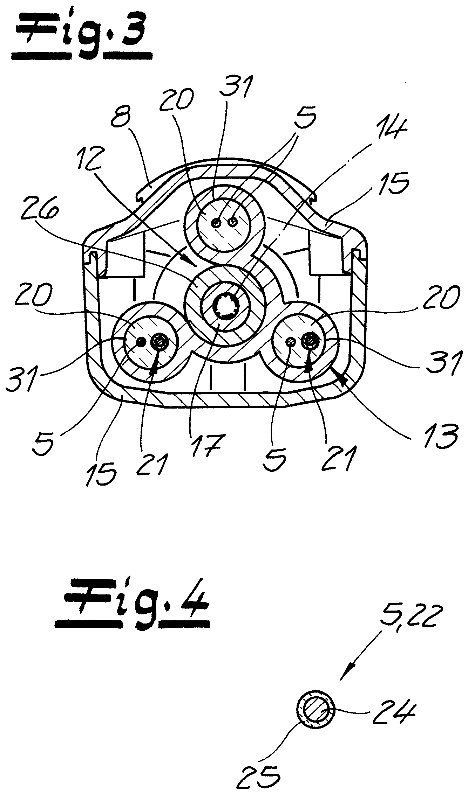

In Figur 3 ist ein Querschnitt von Gehäuse 6, Halter 13 und Rohrende 2 aus Figur 1 abgebildet. Die elektrischen Verbindungen sind aus Richtung des Anschlussteiles 4 in die Aufnahmen 31 eingesteckt. Alle Aufnahmen 31 sind so ausgebildet, dass sie die elektrischen Verbindungen 20 quetschend aufnehmen und daher einen Kraftschluss auf die elektrischen Verbindungen 20 ausüben. Außerdem weisen die Aufnahmen 31 für die elektrischen Verbindungen 20 an ihren dem Schutzrohr 18 zugewandten Enden je einen Anschlag 32 auf, damit die axiale Position der elektrischen Verbindungen 20 definiert wird. Gleichzeitig stellen die Anschläge 32 eine Zugentlastung für die elektrischen Verbindungen 20 dar.

In Figur 4 ist ein Querschnitt der Heizdrähte 5 und damit auch der Heizleiter 22 dargestellt. Die Heizdrähte 5 bzw. Heizleiter 22 enthalten eine Litze 24, welche von einer Kunststoffbeschichtung 25 umschlossen ist. Die Kunststoffbeschichtung 25 enthält vorzugsweise Polyvinylidenfluorid (PVDF) und ist in diesem Ausführungsbeispiel durchscheinend, so dass die darin liegende Litze 24 zu sehen ist. Die Kunststoffbeschichtung 25 dient neben dem mechanischen Schutz vor allem auch der Vermeidung von Kurzschlüssen.

## Patentansprüche

1. Rohrleitung für ein fluides Medium von Kraftfahrzeugen, insbesondere für eine wässrige Harnstofflösung, umfassend ein Rohr (1) und einen an einem Rohrende (2) des Rohres (1) angeordneten Verbinder (3), wobei der Verbinder (3) ein Anschlussteil (4), einen Heizdraht (5) und ein das Anschlussteil (4) und den Heizdraht (5) umschließendes Gehäuse (6) aufweist, wobei das Anschlussteil (4) zum rastenden Verbinden mit einem in das Anschlussteil (4) einsteckbaren Stecker (7) einen Rückhalter (8) umfasst, wobei das Gehäuse (6) eine dem Anschlussteil (4) zugewandte Innenseite und eine Außenseite hat, wobei das Rohr (1) ein Innenrohr (17) und ein Schutzrohr (18) umfasst, wobei das Rohr (1) einen Heizleiter (22) umfasst, wobei der Heizleiter (22) um das Innenrohr (17) gewunden ist,
wobei das Anschlussteil (4) zwei Anschlussenden (9, 10) zum fluiddichten Anschluss aufweist, wobei eines der beiden Anschlussenden (9) den Rückhalter (8) und eines der beiden Anschlussenden (10) dem Rohrende (2) zugeordnet ist, wobei das Anschlussteil (4) einen Zwischenabschnitt (11) zwischen den Anschlussenden (9, 10) umfasst, wobei das Anschlussteil (4) eine dem Gehäuse (6) zugewandte Außenseite und eine Innenseite aufweist, wobei die Innenseite des Anschlussteils (4) einen Kanal (12) bildet, welcher die Anschlussenden (9, 10) zwecks Durchleitung des fluiden Mediums durch das Anschlussteil (4) miteinander verbindet,
wobei sich der Heizdraht (5) wenigstens von dem dem Rohrende (2) zugeordneten Anschlussende (10) bis in den Zwischenabschnitt (11) erstreckt und dass der Verbinder (3) wenigstens entlang des Zwischenabschnittes (11) des Anschlussteils (4) frei von in oder auf dem Anschlussteil (4) angeordneten Ausrichtungselementen zur Ausrichtung des Heizdrahtes (5) ist
**dadurch gekennzeichnet, dass**
ein Wärmeleitelement (14) im Inneren des Rohrendes (2) angeordnet ist, welches Wärmeleitelement (14) sich bis in das Anschlussteil (4) erstreckt.

2. Rohrleitung nach Anspruch 1, wobei ein Raum zwischen der Innenseite des Anschlussteils (4) und der Außenseite des Gehäuses (6) wenigstens entlang des Zwischenabschnitts (11) des Anschlussteils (4) frei von Ausrichtungselementen zur Ausrichtung des Heizdrahtes (5) ist.

3. Rohrleitung nach einem der Ansprüche 1 oder 2, wobei der Heizdraht (5) am Rohrende (2) befestigt und insbesondere form- und/oder kraftschlüssig befestigt ist.

4. Rohrleitung nach einem der Ansprüche 1 bis 3, wobei ein Halter (13) zur Halterung des Heizdrahtes (5) bzw. von elektrischen Verbindungen (20) am Rohrende (2) angeordnet ist.

5. Rohrleitung nach Anspruch 4, wobei der Halter (13) wenigstens eine, vorzugsweise wenigstens zwei und besonders vorzugsweise wenigstens drei Aufnahmen (31) zur Aufnahme von jeweils einer elektrischen Verbindung (20) umfasst, wobei die Aufnahme (31) bzw. Aufnahmen (31) rohrförmig und bevorzugt hohlzylindrisch ausgebildet ist/sind.

6. Rohrleitung nach einem der Ansprüche 1 bis 5, wobei der Heizdraht (5) eine Litze (31) mit einer Kunststoffbeschichtung (25) aufweist, wobei die Kunststoffbeschichtung (25) vorzugsweise einen Fluorkunststoff umfasst.

7. Rohrleitung nach einem der Ansprüche 1 bis 6, wobei der Heizdraht (5) zwischen dem Anschlussteil (4) - vorzugsweise zwischen dem Zwischenabschnitt (11) - und dem Gehäuse (6) form- und/oder kraftschlüssig befestigt ist.

8. Rohrleitung nach einem der Ansprüche 1 bis 7, wobei das Gehäuse (6) miteinander verbundene Gehäuseteile (15) umfasst.

9. Rohrleitung nach einem der Ansprüche 1 bis 8, wobei das Schutzrohr (18) gegenüber dem Innenrohr (17) am Rohrende (2) abgedichtet ist.

10. Rohrleitung nach einem der Ansprüche 1 bis 9, wobei das Rohrende (2) in das dem Rohrende (2) zugeordneten Anschlussende (10) des Anschlussteils (4) hineingesteckt ist.

11. Rohrleitung nach einem der Ansprüche 1 bis 10, wobei das Gehäuse (6) wenigstens eine elektrische Verbindung (20), vorzugsweise wenigstens zwei elektrische Verbindungen (20) und besonders vorzugsweise wenigstens drei elektrische Verbindungen (20), beispielsweise zur Kontaktierung des Heizdrahtes (5) mit einem Kaltleiter (21) für eine externe elektrische Steckverbindung, umschließt.

12. Rohrleitung nach einem der Ansprüche 4 bis 11, wobei das Gehäuse (6) und der Halter (13) so ausgebildet sind, dass sie einander nicht berühren.

13. Rohrleitung nach einem der Ansprüche 1 bis 12, wobei das Anschlussteil (4) mehrteilig ausgebildet ist.

14. Verfahren zum Betrieb einer Rohrleitung, insbesondere einer Rohrleitung nach einem der Ansprüche 1 bis 13, wobei die Rohrleitung ein Rohr (1) und einen an einem Rohrende (2) des Rohres (1) angeordneten Verbinder (3) umfasst, wobei der Verbinder (3) ein Anschlussteil (4), einen Heizdraht (5) und ein das Anschlussteil (4) und den Heizdraht (5) umschließendes Gehäuse (6) aufweist, wobei das Anschlussteil (4) zum rastenden Verbinden mit einem in das Anschlussteil (4) einsteckbaren Stecker (7) einen Rückhalter (8) umfasst, wobei das Gehäuse (6) eine dem Anschlussteil (4) zugewandte Innenseite und eine Außenseite hat, wobei das Rohr (1) ein Innenrohr (17) und ein Schutzrohr (18) umfasst, wobei das Rohr (1) einen Heizleiter (22) umfasst,
wobei das Anschlussteil (4) zwei Anschlussenden (9, 10) zum fluiddichten Anschluss aufweist, wobei eines der beiden Anschlussenden (9) dem Rückhalter (8) und eines der beiden Anschlussenden (10) dem Rohrende (2) zugeordnet ist, wobei das Anschlussteil (4) einen Zwischenabschnitt (11) zwischen den Anschlussenden (9, 10) umfasst, wobei das Anschlussteil (4) eine dem Gehäuse (6) zugewandte Außenseite und eine Innenseite aufweist, wobei die Innenseite des Anschlussteils (4) einen Kanal (12) bildet, welcher die Anschlussenden (9, 10) zwecks Durchleitung des fluiden Mediums durch das Anschlussteil (4) miteinander verbindet,
wobei sich der Heizdraht (5) wenigstens von dem in dem Rohrende (2) zugeordneten Anschlussende (10) bis in den Zwischenabschnitt (11) erstreckt, wobei der Heizleiter (22) entlang wenigstens eines Abschnittes des Rohres (1) verläuft und mit dem Heizdraht (5) verbunden ist, wobei der Heizleiter (22) um das Innenrohr (17) gewunden ist, wobei im Betrieb der Rohrleitung der Heizdraht (5) das Anschlussteil (4) von außen erwärmt und der Heizleiter (22) das Rohr (1) erwärmt,
**dadurch gekennzeichnet, dass**
ein Wärmeleitelement (14) im Inneren des Rohrendes (2) angeordnet ist, welches Wärmeleitelement (14) sich bis in das Anschlussteil (4) erstreckt, so dass das Wärmeleitelement (14) im Betrieb der Rohrleitung einen Teil der von dem Heizleiter (22) erzeugten Wärmemenge aufnimmt und in das Anschlussteil (4) leitet, so dass das Anschlussteil (4) von innen erwärmt wird.

## Claims

1. A pipeline for a fluid medium of motor vehicles, in particular for an aqueous urea solution, comprising a pipe (1) and a connector (3) arranged at a pipe end (2) of the pipe (1), wherein the connector (3) has a connecting part (4), a heating wire (5) and a housing (6) that encases the connecting part (4) and the heating wire (5), wherein the connecting part (4) comprises a retainer (8) for establishing a latched connection with a plug (7) that can be inserted into the connecting part (4), wherein the housing (6) has an inner side facing the connecting part (4) and an outer side, wherein the pipe (1) comprises an inner pipe (17) and a protective pipe (18), wherein the pipe (1) comprises a heat conductor (22), wherein the heat conductor (22) is wound around the inner pipe (17),
wherein the connecting part (4) has two connecting ends (9, 10) for a fluid-tight connection, wherein one of the two connecting ends (9) is allocated to the retainer (8) and one of the two connecting ends (10) is allocated to the pipe end (2), wherein the connecting part (4) comprises an intermediate section (11) between the connecting ends (9, 10), wherein the connecting part (4) has an outer side facing the housing (6) and an inner side, wherein the inner side of the connecting part (4) forms a channel (12), which connects the connecting ends (9, 10) with each other in order to pass the fluid medium though the connecting part (4),
wherein the heating wire (5) extends at least from the connecting end (10) allocated to the pipe end (2) until into the intermediate section (11), and the connector (3) is free of alignment elements arranged in or on the connecting part (4) for aligning the heating wire (5), at least along the intermediate section (11),
**characterized in that**
a heat conducting element (14) is arranged inside of the pipe end (2), wherein the heat conducting element (14) extends until into the connecting part (4).

2. The pipeline according to claim 1, wherein a space between the inner side of the connecting part (4) and the outer side of the housing (6) is free of alignment elements for aligning the heating wire (5), at least along the intermediate section (11) of the connecting part (4).

3. The pipeline according to one of claims 1 or 2, wherein the heating wire (5) is fastened to the pipe end (2), and in particular in a formlocking manner and/or in a frictionally engaged manner fastened.

4. The pipeline according to one of claims 1 to 3, wherein a holder (13) for mounting the heating wire (5) or electrical connections (20) is arranged at the pipe end (2).

5. The pipeline according to claim 4, wherein the holder (13) comprises at least one, preferably at least two, and particularly preferably at least three receptacles (31) for receiving a respective electrical connection (20), wherein the receptacle (31) or receptacles (31) is/are tubular, and preferably hollow cylindrical in design.

6. The pipeline according to one of claims 1 to 5, wherein the heating wire (5) has a braid (31) with a plastic coating (25), wherein the plastic coating (25) preferably comprises a fluoroplastic.

7. The pipeline according to one of claims 1 to 6, wherein the heating wire (5) is in a formlocking manner and/or in a frictionally engaged manner fastened between the connecting part (4)-preferably between the intermediate section (11)-and the housing (6) .

8. The pipeline according to one of claims 1 to 7, wherein the housing (6) comprises interconnected housing parts (15).

9. The pipeline according to one of claims 1 to 8, wherein the protective pipe (18) is sealed relative to the inner pipe (17) at the pipe end (2).

10. The pipeline according to one of claims 1 to 9, wherein the pipe end (2) is inserted into the connecting end (10) of the connecting part (4) allocated to the pipe end (2).

11. The pipeline according to one of claims 1 to 10, wherein the housing (6) envelops at least one electrical connection (20), preferably at least two electrical connections (20) and especially preferably at least three electrical connections (20), for example for contacting the heating wire (5) with a PTC thermistor (21) for an external electrical plug connection.

12. The pipeline according to one of claims 4 to 11, wherein the housing (6) and holder (13) are designed so as not to contact each other.

13. The pipeline according to one of claims 1 to 12, wherein the connecting part (4) has a multipart design.

14. A method for operating a pipeline, in particular a pipeline according to one of claims 1 to 13, wherein the pipeline comprises a pipe (1) and a connector (3) arranged at a pipe end (2) of the pipe (1), wherein the connector (3) has a connecting part (4), a heating wire (5) and a housing (6) that encases the connecting part (4) and the heating wire (5), wherein the connecting part (4) comprises a retainer (8) for establishing a latched connection with a plug (7) that can be inserted into the connecting part (4), wherein the housing (6) has an inner side facing the connecting part (4) and an outer side, wherein the pipe (1) comprises an inner pipe (17) and a protective pipe (18), wherein the pipe (1) comprises a heat conductor (22),
wherein the connecting part (4) has two connecting ends (9, 10) for a fluid-tight connection, wherein one of the two connecting ends (9) is allocated to the retainer (8) and one of the two connecting ends (10) is allocated to the pipe end (2), wherein the connecting part (4) comprises an intermediate section (11) between the connecting ends (9, 10), wherein the connecting part (4) has an outer side facing the housing (6) and an inner side, wherein the inner side of the connecting part (4) forms a channel (12), which connects the connecting ends (9, 10) with each other in order to pass the fluid medium though the connecting part (4),
wherein the heating wire (5) extends at least from the connecting end (10) allocated to the pipe end (2) until into the intermediate section (11), wherein the heat conductor (22) runs along at least one section of the pipe (1) and is connected with the heating wire (5), wherein the heat conductor (22) is wound around the inner pipe (17), wherein, during operation of the pipeline, the heating wire (5) heats the connecting part (4) from outside and the heat conductor (22) heats the pipe (1),
**characterized in that**
a heat conducting element (14) is arranged inside of the pipe end (2), wherein the heat conducting element (14) extends until into the connecting part (4), so that, during operation of the pipeline, the heat conducting element (14) absorbs a portion of the heat quantity generated by the heat conductor (22) and guides it into the connecting part (4), so that the connecting part (4) is heated from inside.

## Revendications

1. Conduite pour un milieu fluide de véhicules automobiles, notamment pour une solution d'urée aqueuse, comprenant un tuyau (1) et un raccord (3) disposé sur un embout de tuyau (2) du tuyau (1), le raccord (3) comportant un partie de raccordement (4), un fil chauffant (5) et un boîtier (6) entourant la partie de raccordement (4) et le fil chauffant (5), la partie de raccordement (4) comprenant un blocage (8) pour un raccordement encliquetable avec un connecteur emboîtable (7) dans la partie de raccordement (4), le boîtier (6) possédant un côté intérieur tourné vers la partie de raccordement (4) et un côté extérieur, le tuyau (1) comprenant un tuyau intérieur (17) et un tube de protection (18), le tuyau (1) comprenant un conducteur chauffant (22), le conducteur chauffant (22) étant enroulé autour du tuyau intérieur (17),
la partie raccordement (4) comportant deux embouts de raccordement (9, 10) pour le raccordement étanche au fluide, un des deux embouts de raccordement (9) étant attribué au blocage (8) et un des deux embouts de raccordement (10) étant attribué à l'embout de tuyau (2), la partie de raccordement (4) comprenant une section intermédiaire (11) entre les embouts de raccordement (9, 10), la partie de raccordement (4) comportant un coté extérieur tourné vers le boîtier (6) et un côté intérieur, le côté intérieur de la partie de raccordement (4) formant un canal (12), lequel relie entre eux les embouts de raccordement (9, 10) dans le but de faire passer le milieu fluide à travers la partie de raccordement (4),
le fil chauffant (5) s'étendant au moins de l'embout de raccordement (10) attribué à l'embout de tuyau (2) jusque dans la section intermédiaire (11) et en ce que le raccord (3) est au moins le long de la section intermédiaire (11) de la partie de raccordement (4) dépourvu d'élément d'orientation disposés dans ou sur la partie de raccordement (4) pour l'orientation du fil chauffant (5),
**caractérisée en ce**
**qu'**un élément thermo-conducteur (14) est disposé à l'intérieur de l'embout de tuyau (2), lequel élément thermo-conducteur (14) s'étend dans la partie de raccordement (4).

2. Conduite selon la revendication 1, un espace entre le côté intérieur de la partie de raccordement (4) et le côté extérieur du boîtier (6) étant au moins le long de la section intermédiaire (11) de la partie de raccordement (4) dépourvu d'éléments d'orientation pour l'orientation du fil chauffant (5).

3. Conduite selon l'une quelconque des revendications 1 ou 2, le fil chauffant (5) étant fixé sur l'embout de tuyau (2) et notamment par conformité de forme et/ou de friction.

4. Conduite selon l'une quelconque des revendications 1 à 3, un support (13) pour le maintien du fil chauffant (5) ou de liaisons électriques (20) étant disposé sur l'embout de tuyau (2).

5. Conduite selon la revendication 4, le support (13) comprenant au moins deux et notamment de préférence au moins trois logements (31) pour recevoir respectivement une liaison électrique (20), le logement (31) ou les logements (31) étant constitué(s) en forme de tube et de préférence cylindrique(s) creux.

6. Conduite selon l'une quelconque des revendications 1 à 5, le fil chauffant (5) comportant un cordon (31) avec un revêtement en matière plastique (25), le revêtement en matière plastique (25) comprenant de préférence une matière plastique fluorée.

7. Conduite selon l'une quelconque des revendications 1 à 6, le fil chauffant (5) étant fixé par conformité de forme et/ou de friction entre la partie de raccordement (4), de préférence entre la section intermédiaire (11), et le boîtier (6).

8. Conduite selon l'une quelconque des revendications 1 à 7, le boîtier (6) comprenant des parties de boîtier (15) reliées entre elles.

9. Conduite selon l'une quelconque des revendications 1 à 8, le tube de protection (18) étant étanchéifié par rapport au tuyau intérieur (17) sur l'embout de tuyau (2) .

10. Conduite selon l'une quelconque des revendications 1 à 9, l'embout de tuyau (2) étant emboîté dans l'embout de raccordement (10) attribué à l'embout de tuyau (2) de la partie de raccordement (4).

11. Conduite selon l'une quelconque des revendications 1 à 10, le boîtier (6) entourant au moins une liaison électrique (20), de préférence au moins deux liaisons électriques (20) et de façon particulièrement préférée au moins trois liaisons électriques (20), par exemple pour mettre en contact le fil chauffant (5) avec une thermistance CTP (21) (à coefficient de température positif) pour une connexion électrique externe.

12. Conduite selon l'une quelconque des revendications 4 à 11, le boîtier (6) et le support (13) étant constitués de telle sorte qu'ils ne se touchent pas.

13. Conduite selon l'une quelconque des revendications 1 à 12, la partie de raccordement (4) étant constituée en plusieurs parties.

14. Procédé destiné à faire fonctionner une conduite selon l'une quelconque des revendications 1 à 13, la conduite comprenant un tuyau (1) et un raccord (3) disposé sur un embout de tuyau (2) du tuyau (1), le raccord (3) comportant une partie de raccordement (4), un fil chauffant (5) et un boîtier (6) entourant la partie de raccordement (4) et le fil chauffant (5), la partie de raccordement (4) comprenant un blocage (8) pour un raccordement encliquetable avec un connecteur emboîtable (7) dans la partie de raccordement (4), le boîtier (6) possédant un côté intérieur tourné vers la partie de raccordement (4) et un côté extérieur, le tuyau (1) comprenant un tuyau intérieur (17) et un tube de protection (18), le tuyau (1) comprenant un conducteur chauffant (22),
la partie raccordement (4) comportant deux embouts de raccordement (9, 10) pour le raccordement étanche au fluide, un des deux embouts de raccordement (9) étant attribué au blocage (8) et un des deux embouts de raccordement (10) étant attribué à l'embout de tuyau (2), la partie de raccordement (4) comprenant une section intermédiaire (11) entre les embouts de raccordement (9, 10), la partie de raccordement (4) comportant un coté extérieur tourné vers le boîtier (6) et un côté intérieur, le côté intérieur de la partie de raccordement (4) formant un canal (12), lequel relie entre eux les embouts de raccordement (9, 10) dans le but de faire passer le milieu fluide à travers la partie de raccordement (4),
le fil chauffant (5) s'étendant au moins de l'embout de raccordement (10) attribué à l'extrémité de tuyau (2) jusque dans la section intermédiaire (11), le conducteur chauffant (22) passant le long au moins d'un tronçon du tuyau (1) et étant relié au fil chauffant (5), le conducteur chauffant (22) étant enroulé autour du tuyau intérieur (17), le fil chauffant (5) réchauffant de l'extérieur la partie de raccordement (4) pendant le fonctionnement de la conduite et le conducteur chauffant (22) réchauffant le tuyau (1),
**caractérisé en ce**
**qu'**un élément thermo-conducteur (14) est disposé à l'intérieur de l'embout de tuyau (2), lequel élément thermo-conducteur (14) s'étend jusque dans la partie de raccordement (4) de sorte que l'élément thermo-conducteur (14) absorbe pendant le fonctionnement de la conduite, une partie de la quantité de chaleur produite par le conducteur chauffant (22) et la dirige dans la partie de raccordement (4) de telle sorte que la partie de raccordement (4) est réchauffée de l'intérieur.
